# EUROPÄISCHE PATENTSCHRIFT

(11) **EP 1 097 277 B1**
(45) Veröffentlichungstag und Bekanntmachung des Hinweises auf die Patenterteilung: **06.02.2002**
(21) Anmeldenummer: 99936482.1
(22) Anmeldetag: 06.07.1999
(51) Int. Cl.: E04B 1/98, F16F 7/10

(54) **VERFAHREN ZUR DÄMPFUNG VON MECHANISCHEN SCHWINGUNGEN EINER BRÜCKE UND VORRICHTUNG ZUR DURCHFÜHRUNG DES VERFAHRENS**
METHOD FOR DAMPING THE MECHANICAL OSCILLATIONS OF A BRIDGE AND DEVICE FOR CARRYING OUT THE METHOD
PROCEDE POUR AMORTIR LES OSCILLATIONS MECANIQUES D'UN PONT ET DISPOSITIF PERMETTANT DE LE METTRE EN OEUVRE

(30) Priorität: 10.07.1998 DE 19830869
(43) Veröffentlichungstag der Anmeldung: 09.05.2001
(73) Patentinhaber: Mannesmann Rexroth Aktiengesellschaft, 97816 Lohr am Main (DE)
(72) Erfinder: LIEBLER, Gerold, D-97828 Marktheidenfeld (DE)
(86) Internationale Anmeldenummer: EP9904687
(87) Internationale Veröffentlichungsnummer: WO0003101

(56) Entgegenhaltungen:
- US-A- 4 635 892
- US-A- 5 595 372
- PATENT ABSTRACTS OF JAPAN vol. 008, no. 210 (M-328), 26. September 1984 (1984-09-26) & JP 59 097341 A (MITSUBISHI DENKI KK), 5. Juni 1984 (1984-06-05)

## Beschreibung

Die Erfindung betrifft ein Verfahren zur Dämpfung von mechanischen Schwingungen einer Brücke gemäß dem Oberbegriff des Anspruchs 1 und eine Vorrichtung zur Durchführung dieses Verfahrens. Ein solches Verfahren und eine solche Vorrichtung ist z.B. aus der Patentschrift US-A-5 595372 bereits bekannt.

In den letzten Jahrzehnten wuchs die Spannweite von Brücken kontinuierlich an. Dies gilt insbesondere für Hängebrücken. Es ist davon auszugehen, daß sich dieser Trend in der Zukunft fortsetzen wird. Mit zunehmender Spannweite sinkt jedoch die Steifigkeit der Brücken. Dies führt verstärkt zu Schwingungen der Brücke. Diese treten sowohl in Form von Torsionsschwingungen um die Längsachse der Brücke als auch als Biegeschwingungen in Vertikalrichtung auf. Maßnahmen zur mechanischen Versteifung der Brücken sind aufwendig und auch nur in begrenztem Umfang möglich. Ein anderer Weg für die Stabilisierung von Brücken ist der Einsatz von Dämpfungsmitteln, z. B. passiven Massendämpfern. Es hat sich gezeigt, daß Torsionsschwingungen kritischer als Biegeschwingungen sind. Dies bedeutet, daß vorrangig die Torsionsschwingungen zu dämpfen sind.

Der Erfindung liegt die Aufgabe zugrunde, ein Verfahren der eingangs genannten Art anzugeben, das es erlaubt, gezielt die Torsionsschwingungen einer Brücke zu dämpfen, und eine Vorrichtung zur Durchführung dieses Verfahrens anzugeben.

Diese Aufgabe wird hinsichtlich des Verfahrens durch ein Verfahren mit den im Anspruch 1 gekennzeichneten Merkmalen und hinsichtlich der Vorrichtung durch eine Vorrichtung mit den Merkmalen des Anspruchs 5 gelöst. Durch Selektierung der Torsionsschwingungen und den Einsatz einer aktiven Dämpfung lassen sich die Torsionsschwingungen der Brücke gezielt bekämpfen. Dabei führt die aktive Dämpfung der Schwingungen allgemein zu einer verbesserten Dämpfung. Da auf jeder Seite der Längsachse der Brücke eine Dämpfungsmasse über einen hydraulischen Zylinder gehalten ist, läßt sich durch entsprechende Druckbeaufschlagung der Zylinder eine gezielte Dämpfung der Torsionsschwingungen erreichen.

Vorteilhafte Weiterbildungen des erfindungsgemäßen Verfahrens sind in den Ansprüchen 2 bis 4 gekennzeichnet. Durch die getrennte Bildung eines Stellsignals für die Dämpfung der Biegeschwingungen und Verknüpfung mit dem Stellsignal für die Dämpfung der Torsionsschwingungen ist es möglich, nicht nur Torsionsschwingungen sondern auch Biegeschwingungen zu dämpfen. Dabei ist es möglich, die Torsionsschwingungen stärker zu dämpfen als die Biegeschwingungen.

Vorteilhafte Ausgestaltungen der erfindungsgemäßen Vorrichtung sind in den Ansprüchen 6 bis 18 gekennzeichnet. Durch eine gegensinnige Ansteuerung der Zylinder wird ein der Torsionsschwingung der Brücke entgegengerichtetes Drehmoment erzeugt. Durch eine möglichst weit von der Längsachse der Brücke entfernte Anordnung der Meßwertgeber für die Vertikalbeschleunigung erhält man genauere Werte bei der nachfolgenden Differenzbildung. Je weiter die Dämpfungsmassen von der Längsachse der Brücke entfernt sind, desto kleinere Kräfte werden für die aktive Dämpfung der Torsionsschwingungen benötigt. Es reicht aus, wenn die Dämpfungsmassen im Bereich der größten Amplitude der Schwingungen angeordnet werden. Die Verwendung von Ventilen zur Steuerung des den Zylindern zugeführten Drucks führt zu einem günstigen Regelverhalten und ist auch von den Anschaffungskosten her günstig. Die Verwendung von doppelt wirkenden Zylindern erlaubt, Kraft in beiden Richtungen auszuüben. Die Verwendung einer Verstellpumpe als Volumenstromquelle ist energetisch besser als der Einsatz von Ventilen zur Steuerung des den Zylindern zugeführten Drucks. Dabei haben einfach wirkende Zylinder den Vorteil eines einfachen konstruktiven Aufbaus, während bei doppelt wirkenden Zylindern Pumpen mit einem kleineren Volumenstrom verwendet werden können. Die zu den hydraulischen Zylindern parallelgeschalteten Federn nehmen die statische Last der Dämpfungsmassen auf, die hydraulischen Zylinder können kleiner gewählt werden. Bei einer Störung der aktiven Schwingungsdämpfung bewirken parallel zu den Zylindern und Federn angeordnete passive Dämpfungselemente eine Grunddämpfung. Durch einen hydraulischen Kurzschluß der Zylinder werden die hydraulischen Zylinder bei einer Störung der aktiven Schwingungsdämpfung unwirksam gemacht. Durch eine Unterbringung der Komponenten der Dämpfungsvorrichtung einschließlich der Dämpfungsmassen in einem geschlossenen Raum ergibt sich ein Schutz vor äußeren Einflüssen. Hierfür ist insbesondere der Hohlkasten einer Brücke geeignet.

Die Erfindung wird im folgenden mit ihren weiteren Einzelheiten anhand eines in den Zeichnungen dargestellten Ausführungsbeispiels näher erläutert. Es zeigen
- Figur 1: einen Querschnitt durch eine Brücke mit einem Hohlkasten in schematischer Darstellung,
- Figur 2: ein hybrides Dämpfungselement auf der einen Seite der Längsachse der Brücke in schematischer Darstellung,
- Figur 3: ein hybrides Dämpfungselement auf der anderen Seite der Längsachse der Brücke in schematischer Darstellung,
- Figur 4: das Blockschaltbild einer Vorrichtung zur Dämpfung von Torsionsschwingungen und
- Figur 5: das Blockschaltbild einer Steuereinrichtung zur gleichzeitigen Dämpfung von Torsionsschwingungen und Biegeschwingungen.

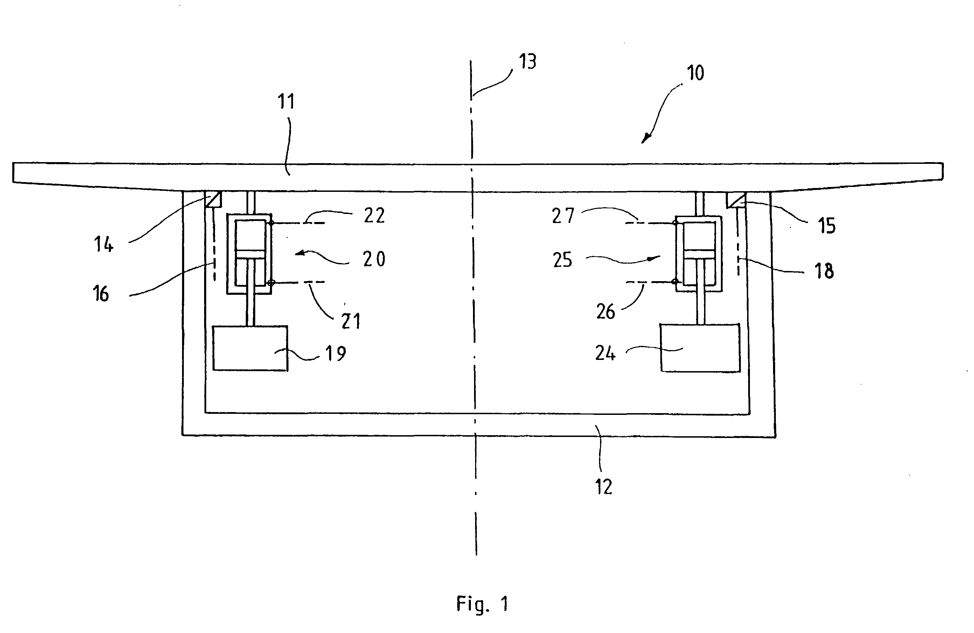

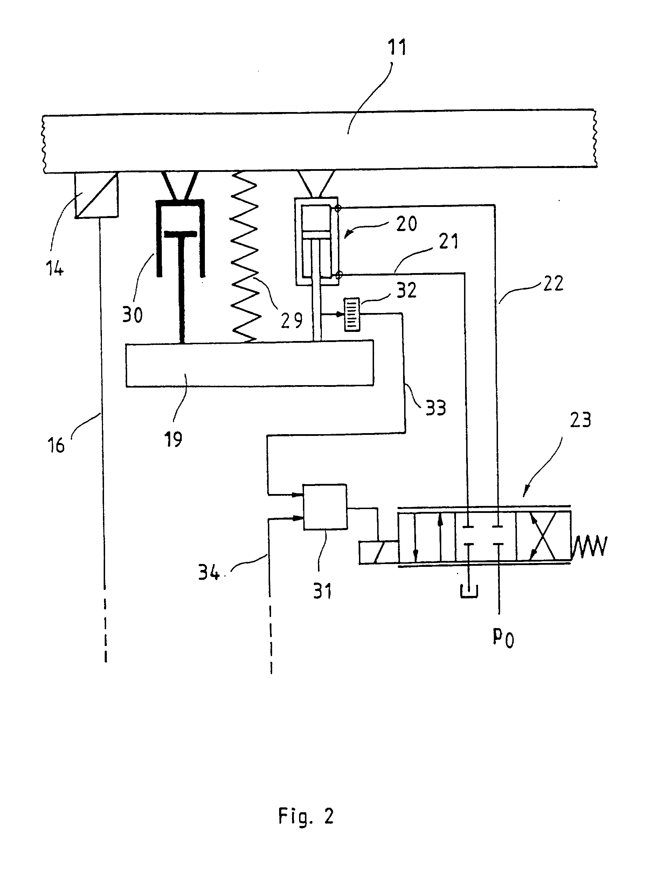

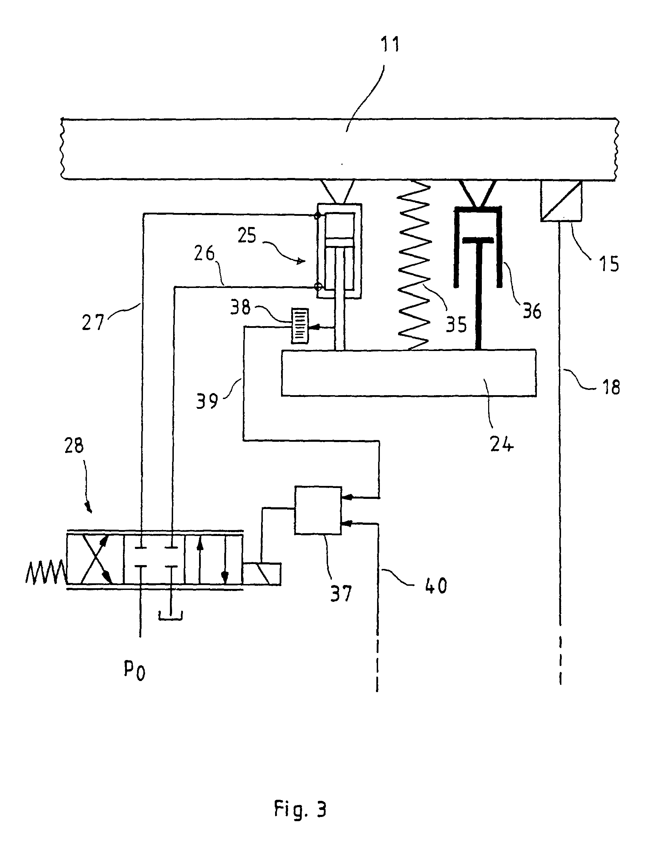

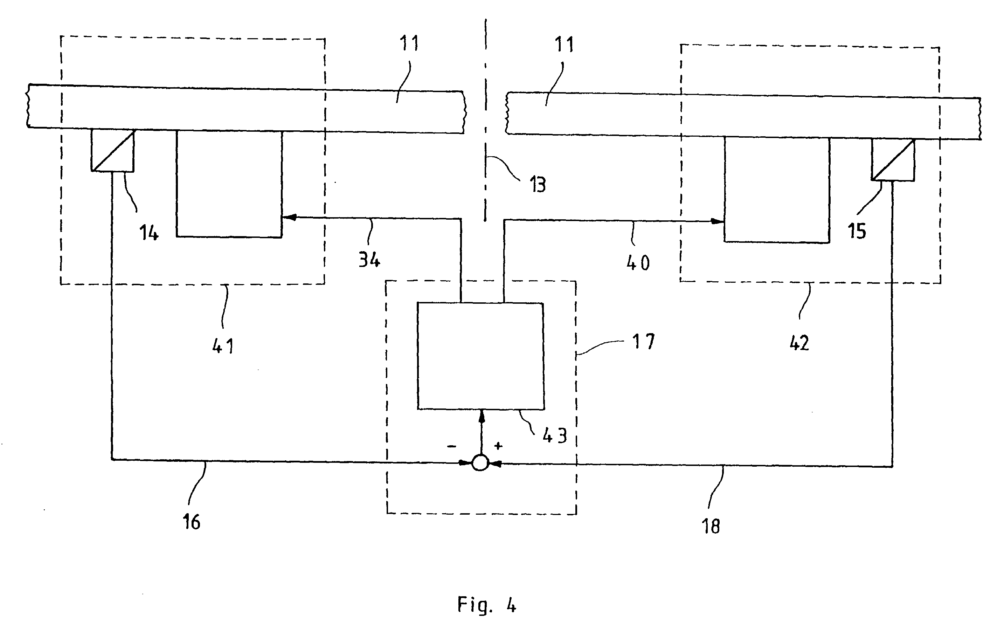

Die Figur 1 zeigt in schematischer Darstellung einen Querschnitt durch eine Brücke 10. Ein Brückendeck 11 bildet den oberen Abschluß eines Hohlkastens 12. Der Querschnitt der Brücke 10 ist symmetrisch zu ihrer Längsachse 13. Auf beiden Seiten der Längsachse 13 der Brücke 10 sind innerhalb des Hohlkastens 12 zwei Meßwertgeber 14 und 15 zur Erfassung der Vertikalbeschleunigung der Brücke 10 angeordnet. Die auf den Meßwertgeber 14 wirkende Vertikalbeschleunigung ist mit a_{L} bezeichnet. Der Meßwertgeber 14 wandelt den Beschleunigungswert in ein elektrisches Ausgangssignal xa_{L} um. Es wird über eine Leitung 16 einer in der Figur 4 dargestellten Steuereinrichtung 17 zugeführt. In entsprechender Weise ist die auf den Meßwertgeber 15 wirkende Vertikalbeschleunigung mit a_{R} bezeichnet. Der Meßwertgeber 15 wandelt den Beschleunigungswert in ein elektrisches Ausgangssignal xa_{R} um. Es wird der Steuereinrichtung 17 über eine Leitung 18 zugeführt. Eine Dämpfungsmasse 19 ist über einen Differentialzylinder 20 an dem Brückendeck 11 gehalten. Die stangenseitige Kammer des Differentialzylinders 20 ist über eine hydraulische Leitung 21 mit einem in der Figur 2 dargestellten Ventil 23 verbunden. Die bodenseitige Kammer des Differentialzylinders 20 ist über eine Leitung 22 mit dem Ventil 23 verbunden. In gleicher Weise ist auf der anderen Seite der Längsachse 13 eine Dämpfungsmasse 24 über einen Differentialzylinder 25 mit dem Brückendeck 11 verbunden. Die stangenseitige Kammer des Differentialzylinders 25 ist über eine hydraulische Leitung 26 mit einem in der Figur 3 dargestellten Ventil 28 verbunden. Die bodenseitige Kammer des Differentialzylinders 25 ist über eine Leitung 27 mit dem Ventil 28 verbunden.

Die Figuren 2 und 3 zeigen in spiegelbildlicher Darstellung Einzelheiten einer Vorrichtung zur Schwingungsdämpfung gemäß der Erfindung.

In der Figur 2 sind zusätzlich zu dem in der linken Hälfte der Figur 1 dargestellten Differentialzylinder 20 eine Feder 29 und ein passiver Dämpfer 30 dargestellt. Sie bilden zusammen mit dem Differentialzylinder 20 und der Dämpfungsmasse 19 ein hybrides Dämpfungselement. Die hydraulischen Leitungen 21 und 22 führen zu dem Ventil 23. Das Ventil 23 verbindet die Kammern des Differentialzylinders 20 in Abhängigkeit von der Stellung seines Steuerkolbens mit einer in der Figur 2 nicht dargestellten Druckquelle, die einen konstanten, mit p₀ bezeichneten Druck liefert. Das Ventil 23 wird von dem Ausgangssignal eines Reglers 31 angesteuert. Dem Regler 31 ist als Istwert das Ausgangssignal eines Weggebers 32 über eine elektrische Leitung 33 zugeführt. Der Weggeber 32 wandelt die Kolbenstellung des Differentialzylinders 20 in ein entsprechendes elektrisches Signal um. Über eine elektrische Leitung 34 ist dem Regler 31 der Sollwert zugeführt. Durch den Positionsregelkreis mit dem Regler 31 wird der Differentialzylinder 20 so gesteuert, daß sein Kolben dem über die Leitung 34 zugeführten Sollwert folgt.

In der Figur 3 sind zusätzlich zu dem in der rechten Hälfte der Figur 1 dargestellten Differentialzylinder 25 eine Feder 35 und ein passiver Dämpfer 36 dargestellt. Sie bilden zusammen mit dem Differentialzylinder 25 und der Dämpfungsmasse 24 ein hybrides Dämpfungselement. Die hydraulischen Leitungen 26 und 27 führen zu dem Ventil 28. Das Ventil 28 verbindet die Kammern des Differentialzylinders 25 in Abhängigkeit von der Stellung seines Steuerkolbens mit einer in der Figur 3 nicht dargestellten Druckquelle, die einen konstanten, mit p₀ bezeichneten Druck liefert. Das Ventil 28 wird von dem Ausgangssignal eines Reglers 37 angesteuert. Dem Regler 37 ist als Istwert das Ausgangssignal eines Weggebers 38 über eine elektrische Leitung 39 zugeführt. Der Weggeber 38 wandelt die Kolbenstellung des Differentialzylinders 25 in ein entsprechendes elektrisches Signal um. Über eine elektrische Leitung 40 ist dem Regler 37 der Sollwert zugeführt. Durch den Positionsregelkreis mit dem Regler 37 wird der Differentialzylinder 25 so gesteuert, daß sein Kolben dem über die Leitung 40 zugeführten Sollwert folgt.

Die Figur 4 zeigt das Blockschaltbild einer Vorrichtung zur Dämpfung von Torsionsschwingungen. Die Einzelheiten der Figur 2 sind in einem Block 41 mit der Eingangsleitung 34 und der Ausgangsleitung 16 zusammengefaßt. In gleicher Weise sind die Einzelheiten der Figur 3 in einem Block 42 mit der Eingangsleitung 40 und der Ausgangsleitung 18 zusammengefaßt. Der Steuereinheit 17 sind über die Leitungen 16 und 18 die von den Meßwertgebern 14 und 15 erfaßten Vertikalbeschleunigungen zugeführt. Die Steuereinheit 17 bildet aus der Differenz der Vertikalbeschleunigungen in einer Recheneinrichtung 43 nach einer Rechenvorschrift ein Stellsignal für die Dämpfung der Torsionsschwingungen. Die Recheneinrichtung 43 ist nur als Block dargestellt. Sie kann als Analogrechner oder auch als Digitalrechner ausgebildet sein. Im Fall eines Digitalrechners sind in an sich bekannter Weise Analog/Digital-Wandler im Eingang und Digital/Analog-Wandler im Ausgang vorzusehen. Die Recheneinrichtung 43 bildet aus dem Stellsignal zwei Steuersignale, die den Reglern 31 und 37 über die Leitungen 34 bzw. 40 zugeführt sind. Die Regler 31 und 37 beaufschlagen gemäß dem Steuersignal die Differentialzylinder 20 bzw. 25 mit einem die Torsionsschwingungen der Brücke 10 verringernden Druck. Zur Dämpfung der Torsionsschwingungen werden die Differentialzylinder 20 und 25 gegensinnig angesteuert. Das Stellsignal wird z. B. so berechnet, daß der Kolbenweg der Differentialzylinder 20 und 25 dem zeitlichen Integral der gemessenen Vertikalbeschleunigungen entgegenwirkt.

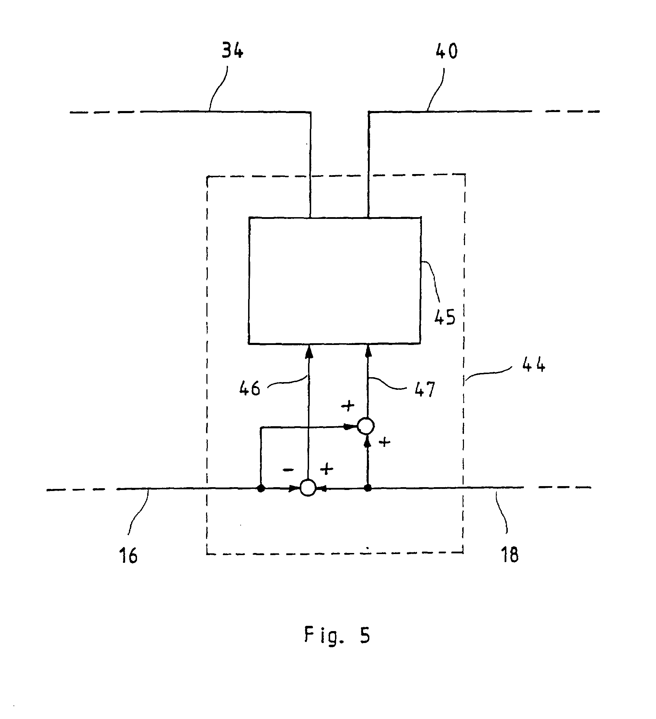

Die Figur 5 zeigt eine Steuereinrichtung 44, die nicht nur eine Dämpfung von Torsionsschwingungen sondern auch von Biegeschwingungen ermöglicht. Die Steuereinrichtung 44 ersetzt die Steuereinrichtung 17 der Figur 4. Die Eingangssignale sind der Steuereinrichtung 44 über die Leitungen 16 und 18 zugeführt, die Ausgangssignale sind den Blöcken 41 und 42 über die Leitungen 34 bzw. 40 zugeführt. Einer Recheneinrichtung 45 ist über eine Leitung 46 die Differenz xa_{R} - xa_{L} der Beschleunigungswerte und über eine Leitung 47 die Summe xa_{R} + xa_{L} der Beschleunigungswerte zugeführt. Wie im Zusammenhang mit der Figur 4 beschrieben, bildet die Recheneinrichtung 45 aus der Differenz der Beschleunigungswerte ein Stellsignal für die Dämpfung der Torsionsschwingungen. Die Recheneinrichtung 45 bildet außerdem aus der Summe der Beschleunigungswerte ein zweites Stellsignal für die Dämpfung der Biegeschwingungen. Die Recheneinrichtung 45 verknüpft die beiden Stellsignale derart zu einem resultierenden Stellsignal, daß die Differentialzylinder 20 und 25 zur Dämpfung der Torsionsschwingungen gegensinnig und zur Dämpfung der Biegeschwingungen gleichsinnig angesteuert werden. Dabei ist es vorteilhaft, die Torsionsschwingungen stärker zu dämpfen als die Biegeschwingungen.

In den Figuren 2 und 3 werden die Differentialzylinder 20 und 25 in einem offenen Hydraulikkreis über Ventile 23 bzw. 28 aus einer Druckquelle mit Druckmittel beaufschlagt. Statt dessen kann den Differentialzylindern 20 und 25 von einer Verstellpumpe ein von den Reglern 31 bzw. 37 gesteuerter Volumenstrom zugeführt werden. In diesem Fall können als Stellglieder entweder einfach wirkende Zylinder im offenen Hydraulikkreis oder doppelt wirkende Zylinder im geschlossenen Hydraulikkreis verwendet werden.

Die Meßwertgeber 14 und 15 sowie die Dämpfungsmassen 19 und 24 werden in Längsrichtung der Brücke 10 gesehen im Bereich der größten Schwingungsamplituden angeordnet.

Für die erfindungsgemäße aktive Dämpfung der Torsionsschwingungen der Brücke 10 und auch für die zusätzliche aktive Dämpfung der Biegeschwingungen sind die Federn 29 und 35 sowie die passiven Dämpfer 30 und 36 nicht zwingend erforderlich. Durch den Einsatz der Federn 29 und 35 sowie der passiven Dämpfer 30 und 36 können einerseits die Differentialzylinder 20 und 25 kleiner gewählt werden, andererseits wird durch diese Maßnahme im Störungsfall eine Mindestdämpfung gewährleistet.

Um die Differentialzylinder 20 und 25 im Störungsfall unwirksam zu machen, werden die Kammern der Differentialzylinder 20 und 25 durch in den Figuren 2 und 3 nicht dargestellte federbelastete Schaltventile miteinander und mit dem Tank verbunden und gleichzeitig die Verbindungen der Kammern der Differentialzylinder 20 und 25 zu den Ventilen 23 und 28 abgesperrt. Durch einen derartigen hydraulischen Kurzschluß der Differentialzylinder 20 und 25 werden auf die Kolben der Differentialzylinder 20 und 25 keine Kräfte mehr ausgeübt. Dabei gewährleisten die Federn 29 und 35 sowie die passiven Dämpfer 30 und 36 noch eine Mindestdämpfung der Schwingungen der Brücke 10.

Durch die Anordnung der Komponenten zur Schwingungsdämpfung (wie Meßwertgeber 14 und 15, Steuereinrichtung 17 oder 44, Ventile 23 und 28) einschließlich der Dämpfungsmassen 19 und 24 innerhalb des Hohlkastens 12 sind sie optimal gegen äußere Einflüsse geschützt. Die Meßwertgeber 14 und 15 sowie die Dämpfungsmassen 19 und 24 sind innerhalb des Hohlkastens 12 möglichst weit von der Längsachse 13 der Brücke entfernt angeordnet. Ordnet man die Meßwertgeber 14 und 15 außerhalb des Hohlkastens 12 an, damit sie noch weiter von der Längsachse 13 entfernt sind, muß man durch zusätzliche Maßnahmen für einen Schutz der Meßwertgeber 14 und 15 sowie der elektrischen Leitungen 16 und 18 gegen äußere Einflüsse sorgen.

## Patentansprüche

1. Verfahren zur Dämpfung von mechanischen Schwingungen einer Brücke, insbesondere einer Hängebrücke, bei dem in Abhängigkeit von der Bewegung der Brücke hydraulische Stellglieder im Sinne einer Verringerung der Schwingungen gesteuert werden, **dadurch gekennzeichnet, daß** auf beiden Seiten der Längsachse der Brücke die Vertikalbeschleunigung (a_{L}, a_{R}) gemessen wird, daß zur Dämpfung von Torsionsschwingungen der Brücke aus der Differenz der Beschleunigungswerte ein Stellsignal für die Steuerung der Stellglieder gebildet wird, das die Stellglieder auf beiden Seiten der Längsachse der Brücke gegensinnig ansteuert.

2. Verfahren nach Anspruch 1, **dadurch gekennzeichnet, daß** zur zusätzlichen Dämpfung von Biegeschwingungen der Brücke aus der Summe der Beschleunigungswerte ein zweites Stellsignal für die Steuerung der Stellglieder gebildet wird, das die Stellglieder auf beiden Seiten der Längsachse der Brücke gleichsinnig ansteuert.

3. Verfahren nach Anspruch 2, **dadurch gekennzeichnet, daß** die beiden Stellsignale zu einem resultierenden Stellsignal verknüpft werden.

4. Verfahren nach Anspruch 3, **dadurch gekennzeichnet, daß** Torsionsschwingungen der Brücke stärker gedämpft werden als ihre Biegeschwingungen.

5. Vorrichtung zur Durchführung des Verfahrens nach Anspruch 1, **gekennzeichnet durch** Dämpfungsmassen (19, 24) mit je einem hydraulischen Zylinder (20,25), womit sie auf beiden Seiten der Längsachse (13) der Brücke (10) zu halten sind und **durch** Messwertgeber (14,15), die auf beiden Seiten der Längsachse (13) der Brücke (10) zur Erfassung der Vertikalbeschleunigung (a_{L}, a_{R}) an der Brücke (10) anzuordnen sind, wobei die Ausgangssignale (xa_{L}, xa_{R}) der Meßwertgeber (14, 15) einer Steuereinrichtung (17; 44) zugeführt sind und die Steuereinrichtung (17; 44) die Zylinder (20, 25) entsprechend der Differenz zwischen den Vertikalbeschleunigungen (a_{L}, a_{R}) mit einem die Torsionsschwingungen der Brücke (10) verringernden Druck beaufschlagt.

6. Vorrichtung nach Anspruch 5, **dadurch gekennzeichnet, daß** die Zylinder (20, 25) auf beiden Seiten der Längsachse (13) der Brücke (10) gegensinnig angesteuert sind.

7. Vorrichtung nach Anspruch 5 oder Anspruch 6, **dadurch gekennzeichnet, daß** die Meßwertgeber (14, 15) möglichst weit von der Längsachse (13) der Brücke (10) entfernt angeordnet sind.

8. Vorrichtung nach Anspruch 7, **dadurch gekennzeichnet, daß** die Dämpfungsmassen (19, 24) möglichst weit von der Längsachse (13) der Brücke (10) entfernt angeordnet sind.

9. Vorrichtung nach einem der Ansprüche 5 bis 8, **dadurch gekennzeichnet, daß** die Dämpfungsmassen (19, 24) im Bereich der größten Schwingungsamplituden der Brücke (10) angeordnet sind.

10. Vorrichtung nach einem der Ansprüche 5 bis 9, **dadurch gekennzeichnet, daß** die Zylinder (20, 25) über Ventile (23, 28) mit einer Druckquelle (p₀) verbunden sind und daß die Steuereinrichtung (17; 44) den Öffnungsquerschnitt der Ventile (23, 28) beeinflußt.

11. Vorrichtung nach Anspruch 10, **dadurch gekennzeichnet, daß** die Zylinder als doppelt wirkende Zylinder ausgebildet sind.

12. Vorrichtung nach einem der Ansprüche 5 bis 9, **dadurch gekennzeichnet, daß** die Zylinder von einer Verstellpumpe mit Druckmittel beaufschlagt sind und daß die Steuereinrichtung (17; 44) den Volumenstrom der Verstellpumpe beeinflußt.

13. Vorrichtung nach Anspruch 12, **dadurch gekennzeichnet, daß** die Zylinder als einfach wirkende Zylinder im offenen Hydraulikkreis ausgebildet sind.

14. Vorrichtung nach Anspruch 13, **dadurch gekennzeichnet, daß** die Zylinder als doppelt wirkende Zylinder im geschlossenen Hydraulikkreis ausgebildet sind.

15. Vorrichtung nach einem der Ansprüche 5 bis 14, **dadurch gekennzeichnet, daß** zwischen der Brücke (10) und jeder Dämpfungsmasse (19, 24) eine Feder (29, 35) angeordnet ist.

16. Vorrichtung nach Anspruch 15, **dadurch gekennzeichnet, daß** zwischen der Brücke (10) und jeder Dämpfungsmasse (19, 24) ein passiver Dämpfer (30, 36) angeordnet ist.

17. Vorrichtung nach Anspruch 16, **dadurch gekennzeichnet, daß** bei Störung einer ihrer Komponenten ein hydraulischer Kurzschluß der Zylinder (20, 25) erfolgt.

18. Vorrichtung nach einem der Ansprüche 5 bis 17, **dadurch gekennzeichnet, daß** ihre Komponenten einschließlich der Dämpfungsmassen (19, 24) in einem Hohlkasten (12) der Brücke (10) angeordnet sind.

## Claims

1. A method for the damping of mechanical oscillations of a bridge, in particular a suspension bridge, by which hydraulic actuators are controlled as a function of the movement of the bridge with the intent of reducing the oscillations, **characterized in that** on both sides of the longitudinal axis of the bridge the vertical acceleration (a_{L}, a_{R}) is measured, that, for the purpose of damping torsional oscillations of the bridge, a command signal for the control of the actuators is formed from the difference between the acceleration values, controlling the actuators on either side of the longitudinal axis of the bridge in opposing directions.

2. A method according to Claim 1, **characterized in that,** for additional damping of bending oscillations of the bridge, a second command signal for the control of the actuators is formed from the sum of the acceleration values, controlling the actuators on either side of the longitudinal axis of the bridge in the same direction.

3. A method according to Claim 2, **characterized in that** the two command signals are combined to form a resulting command signal.

4. A method according to Claim 3, **characterized in that** the torsional oscillations of the bridge are more strongly damped that its bending oscillations.

5. A device for applying the method according to Claim 1, **characterized by** damping masses (19, 24), each with one hydraulic cylinder (20, 25) by means of which they are to be held on either side of the longitudinal axis (13) of the bridge (10), and by measuring transducers (14, 15) to be arranged on either side of the longitudinal axis (13) of the bridge (10) for the purpose of sensing the vertical acceleration (a_{L}, a_{R}) at the bridge, whereby the output signals (xa_{L}, xa_{R}) of the measuring transducers (14, 15) are fed to a control device (17; 44) and the control device (17; 44) pressurises the cylinders (20, 25) with a pressure which reduces the torsional oscillations of the bridge (10) as a function of the difference between the vertical accelerations (a_{L}, a_{R}).

6. A device according to Claim 5, **characterized in that** the cylinders (20, 25) on either side of the longitudinal axis (13) of the bridge (10) are controlled in opposing directions.

7. A device according to Claim 5 or Claim 6, **characterized in that** the measuring transducers (14, 15) are arranged at the furthest possible distance from the longitudinal axis (13) of the bridge (10).

8. A device according to Claim 7, **characterized in that** the damping masses (19, 24) are arranged at the furthest possible distance from the longitudinal axis (13) of the bridge (10).

9. A device according to any of Claims 5 to 8, **characterized in that** the damping masses (19, 24) are arranged in the region of the greatest oscillation amplitudes of the bridge (10).

10. A device according to any of Claims 5 to 9, **characterized in that** the cylinders (20, 25) are connected through valves (23, 28) to a pressure source (p₀) and that the control device (17; 44) influences the opening cross-section of the valves (23, 28).

11. A device according to Claim 10, **characterized in that** the cylinders are developed as double-acting cylinders.

12. A device according to any of Claims 5 to 9, **characterized in that** the cylinders are pressurized with pressure fluid by a variable displacement pump and that the control device (17; 44) influences the volumetric flow of the variable displacement pump.

13. A device according to Claim 12, **characterized in that** the cylinders are developed as single-acting cylinders in an open hydraulic circuit.

14. A device according to Claim 13, **characterized in that** the cylinders are developed as double-acting cylinders in a closed hydraulic circuit.

15. A device according to any of Claims 5 to 14, **characterized in that** between the bridge (10) and each damping mass (19, 24) is arranged a spring (29, 35).

16. A device according to Claim 15, **characterized in that** between the bridge (10) and each damping mass (19, 24) is arranged a passive damper (30, 36).

17. A device according to Claim 16, **characterized in that** in the event of a malfunction of one of its components, hydraulic short-circuiting of the cylinders (20, 25) ensues.

18. A device according to any of Claims 5 to 17, **characterized in that** its components, including the damping masses (19, 24), are arranged in a hollow box (12) of the bridge (10).

## Revendications

1. Un procédé destiné à amortir les oscillations mécaniques dans un pont, en particulier un pont suspendu, avec lequel, en fonction du mouvement du pont, des éléments de positionnement hydrauliques sont commandés dans le sens d'une réduction des oscillations, **caractérisé en ce que** l'accélération (a_{L}, a_{R}) verticale est mesurée de part et d'autre de l'axe longitudinal du pont, qu'un signal de commande destiné à la commande des éléments de positionnement, afin d'amortir les oscillations sous forme de torsion du pont, est formé à partir de la différence entre les valeurs d'accélération, qui commande les éléments de positionnement de part et d'autre de l'axe longitudinal du pont dans des sens contraires.

2. Un procédé conforme à la revendication n° 1, **caractérisé en ce que** un deuxième signal de commande destiné à la commande des éléments de positionnement, afin d'amortir de façon additionnelle les oscillations sous forme de pliage du pont, est formé à partir de la somme des valeurs d'accélération, qui commande les éléments de positionnement de part et d'autre de l'axe longitudinal du pont dans les mêmes sens.

3. Un procédé conforme à la revendication n° 2, **caractérisé en ce que** les deux signaux de commande sont combinés pour former un signal de commande résultant.

4. Un procédé conforme à la revendication n° 3, **caractérisé en ce que** les oscillations sous forme de torsion du pont sont plus fortement amorties que ses oscillations sous forme de pliage.

5. Un dispositif destiné à la réalisation du procédé conforme à la revendication n° 1, **caractérisé par** des masses (19, 24) d'amortissement, dotées chacune d'un vérin (20, 25) hydraulique, avec lequel elles sont à maintenir de part et d'autre de l'axe (13) longitudinal du pont (10), et par des capteurs (14, 15) de valeur de mesure, qui sont à disposer de part et d'autre de l'axe (13) longitudinal du pont (10) pour la saisie de l'accélération (a_{L}, a_{R}) verticale, cependant que les signaux (xa_{L}, xa_{R}) de sortie des capteurs (14, 15) de valeur de mesure sont ramenés à un dispositif (17; 44) de commande et le dispositif (17; 44) de commande sollicite les vérins (20, 25), en fonction de la différence entre les accélérations (a_{L}, a_{R}) verticales, avec une pression qui réduit les oscillations sous forme de torsion du pont (10).

6. Un dispositif conforme à la revendication n° 5, **caractérisé en ce que** les vérins (20, 25) de part et d'autre de l'axe (13) longitudinal du pont (10) sont commandés dans des sens contraires.

7. Un dispositif conforme à la revendication n° 5 ou à la revendication n° 6, **caractérisé en ce que** les capteurs (14, 15) de valeur de mesure sont disposés aussi loin que possible de l'axe (13) longitudinal du pont (10).

8. Un dispositif conforme à la revendication n° 7, **caractérisé en ce que** les masses (19, 24) d'amortissement sont disposées aussi loin que possible de l'axe (13) longitudinal du pont (10).

9. Un dispositif conforme à une des revendications n° 5 à n° 8, **caractérisé en ce que** les masses (19, 24) d'amortissement sont disposées dans la zone des plus grandes amplitudes d'oscillation du pont (10).

10. Un dispositif conforme à une des revendications n° 5 à n° 9, **caractérisé en ce que** les vérins (20, 25) sont raccordés à une source (p₀) de pression par des valves (23, 28) et que le dispositif (17 ; 44) de commande a une influence sur la section d'ouverture des valves (23, 28).

11. Un dispositif conforme à la revendication n° 10, **caractérisé en ce que** les vérins sont conçus sous forme de vérins à double effet.

12. Un dispositif conforme à une des revendications n° 5 à n° 9, **caractérisé en ce que** les vérins sont sollicités par du fluide de pression à l'aide d'une pompe à cylindrée variable et que le dispositif (17 ; 44) de commande a une influence sur le débit de la pompe à cylindrée variable.

13. Un dispositif conforme à la revendication n° 12, **caractérisé en ce que** les vérins sont conçus sous forme de vérins à simple effet dans un circuit hydraulique ouvert.

14. Un dispositif conforme à la revendication n° 13, **caractérisé en ce que** les vérins sont conçus sous forme de vérins à double effet dans un circuit hydraulique fermé.

15. Un dispositif conforme à une des revendications n° 5 à n° 14, **caractérisé en ce que** un ressort (29, 35) est disposé entre le pont (10) et chacune des masses (19, 24) d'amortissement.

16. Un dispositif conforme à la revendication n° 15, **caractérisé en ce que** un amortisseur (30, 36) passif est disposé entre le pont (10) et chacune des masses (19, 24) d'amortissement.

17. Un dispositif conforme à la revendication n° 16, **caractérisé en ce que** lors d'une perturbation de l'un de ses composants, un court-circuit hydraulique des vérins (20, 25) s'ensuit.

18. Un dispositif conforme à une des revendications n° 5 à n° 17 **caractérisé en ce que** ses composants, y compris les masses (19, 24) d'amortissement, sont disposés à l'intérieur d'un coffre (12) creux du pont (10).
